# FASCICULE DE BREVET EUROPEEN

(11) **EP 0 655 148 B1**
(45) Date de publication et mention de la délivrance du brevet: **07.01.1999**
(21) Numéro de dépôt: 94918905.4
(22) Date de dépôt: 10.06.1994
(51) Int. Cl.: G05B 19/18, B25J 9/16

(54) **PROCEDE ET DISPOSITIF DE REPERAGE DANS L'ESPACE D'UN OBJET MOBILE TEL QU'UN CAPTEUR OU UN OUTIL PORTE PAR UN ROBOT**
Verfahren und Vorrichtung zur Bestimmung der räumlichen Position eines mobilen Objektes, wie eines Sensors oder eines auf einem Roboter montierten Werkzeuges
METHOD AND DEVICE FOR SPATIAL CALIBRATION OF A MOBILE OBJECT SUCH AS A SENSOR OR A TOOL CARRIED BY A ROBOT

(30) Priorité: 11.06.1993 FR 9307032
(43) Date de publication de la demande: 31.05.1995
(73) Titulaire: BERTIN & CIE, F-78373 Plaisir Cedex (FR); SOLLAC, 92800 Puteaux (FR)
(72) Inventeur: ABITBOL, Marc, F-13382 Marseille (FR); MAILLART, Jean-Luc, F-13320 Bouc-Bel-Air (FR)
(74) Mandataire: Ramey, Daniel
(86) Numéro de dépôt international: FR9400687
(87) Numéro de publication internationale: WO9429774

(56) Documents cités:
- EP-A- 0 114 505
- EP-A- 0 151 417
- WO-A-93/05479
- FR-A- 2 669 257
- PROCEEDINGS OF THE 1993 IEEE INTERNATIONAL CONFERENCE ON ROBOTICS AND AUTOMATION, 2-6 MAI 1993, ATLANTA, GEORGIA, US, 1993 pages 770 - 775, XP402734 CHICHYANG CHEN & YUAN F. ZHENG 'A New Robotic Hand/Eye Calibration Method by Active Viewing of a Checkerboard Pattern'
- PROCEEDINGS OF THE 1990 IEEE INTERNATIONAL CONFERENCE ON ROBOTICS AND AUTOMATION, 13-18 MAI 1990, CINCINNATI, OHIO, US, 1990 pages 34 - 39, XP139858 P. PUGET & T. SKORDAS 'An Optimal Solution for Mobile Camera Calibration'
- JOURNAL OF MANUFACTURING SYSTEMS, vol.7, no.4, 1988, DEARBORN, MICHIGAN, US pages 339 - 357, XP9603 JIANG BERNARD C. ET AL. 'A Review of Recent Developments in Robot Metrology'

## Description

L'invention concerne un procédé et un dispositif de repérage dans l'espace d'un objet mobile tel qu'un capteur ou un outil porté par exemple par un robot pour être déplaçable dans une zone ou un volume d'espace déterminé.

Lorsqu'on veut connaître avec précision la position et l'orientation d'un capteur ou d'un outil monté sur un robot, la position et l'orientation du robot ou ses déplacements ne peuvent être connus avec suffisamment de précision pour qu'il soit possible d'en déduire par calcul la position et l'orientation du capteur ou de l'outil et on est amené pour cela à utiliser des moyens relativement très sophistiqués et coûteux.

On doit par exemple disposer autour de la zone de déplacement du robot au moins deux systèmes de visée d'une cible ou d'une marque de repérage qui est prévue sur le robot. Lorsqu'une précision élevée est demandée, on utilise des théodolites qui sont des appareils très coûteux et délicats à manipuler.

Il est connu, par EP-A-0 114 505, de guider un robot au moyen d'une ou plusieurs caméras montées fixes sur l'extrémité mobile du robot pour viser des cibles disposées autour de la zone de déplacement du robot, les images des cibles vues par les caméras étant traitées par un calculateur pour fournir des informations sur la position de l'extrémité mobile du robot. Cependant, la précision de la détermination de la position est faible et il faut au moins deux caméras pour déterminer la position et l'orientation de l'extrémité du robot.

L'invention a notamment pour but d'éviter les inconvénients de la technique connue.

Elle a pour objet un procédé et un dispositif de repérage de la position d'un objet mobile par triangulation, permettant une grande précision comparable à celle qui serait obtenue par emploi de théodolites, et ne nécessitant qu'un seul système de visée peu coûteux.

Elle propose à cet effet un procédé de repérage dans l'espace d'un objet mobile, tel par exemple qu'un capteur ou un outil monté sur un robot, consistant à monter sur l'objet mobile un détecteur photosensible tel par exemple qu'une caméra vidéo, et à viser au moyen de ce détecteur des cibles disposées en des emplacements prédéterminés par rapport à la zone de déplacement de l'objet mobile, caractérisé en ce qu'il consiste également à monter le détecteur orientable autour d'au moins un axe sur l'objet mobile, à viser les cibles en faisant pivoter le détecteur autour dudit axe et sans déplacer l'objet mobile pour obtenir des signaux de sortie du détecteur correspondant à des images des cibles visées, à déterminer à partir de ces signaux les positions de l'axe optique du détecteur correspondant aux différentes cibles visées, et à en déduire par triangulation la position et l'orientation précises dudit objet mobile.

L'invention se distingue donc de la technique antérieure essentiellement en ce que le système de visée est monté orientable sur l'objet mobile pour viser des cibles différentes par modification de l'orientation du détecteur sans déplacement de l'objet mobile, le détecteur étant constitué d'une caméra vidéo CCD, par exemple noir et blanc, qui est un appareil fiable et peu coûteux, ou éventuellement d'un détecteur à quatre quadrants.

Avantageusement, le détecteur est déplaçable en rotation pas à pas autour de l'axe ou de chaque axe précité, dans des positions angulaires prédéterminées qui sont définies chacune avec une précision élevée de répétabilité.

On peut alors, par une opération préalable de calibration, définir avec précision la direction de l'axe optique du détecteur dans chacune des positions angulaires prédéterminées de celui-ci.

On peut également, par une autre opération de calibration, déterminer avec précision les paramètres propres aux moyens d'orientation du détecteur.

L'invention propose également un dispositif de repérage dans l'espace d'un objet mobile tel par exemple qu'un capteur ou un outil porté par un robot, comprenant un détecteur photosensible tel qu'une caméra vidéo par exemple, porté par l'objet mobile, des cibles disposées en des emplacements prédéterminés par rapport à la zone de déplacement de l'objet mobile, et des moyens de traitement de l'information connectés au détecteur précité pour recevoir des signaux correspondant auxdites cibles visées par le détecteur, caractérisé en ce que le détecteur photosensible est monté orientable autour d'au moins un axe sur l'objet mobile, et en ce que le dispositif comprend également des moyens pour faire tourner le détecteur autour de cet axe en visant des cibles différentes sans déplacer l'objet mobile, les moyens de traitement de l'information recevant également des signaux correspondant aux orientations angulaires du détecteur autour de son axe correspondant aux cibles visées pour en déduire les positions de l'axe optique du détecteur correspondant aux cibles visées et pour déterminer par triangulation la position et l'orientation précises de l'objet mobile.

Avantageusement, ce dispositif comprend également des moyens motorisés de rotation pas à pas du détecteur, permettant d'amener celui-ci dans des positions angulaires définies avec une grande précision de répétabilité.

Les cibles, disposées de préférence en dehors de la zone de déplacement de l'objet mobile et par exemple autour de celle-ci, comprennent des panneaux portant des séries de marques de repérage, formées à des intervalles prédéterminés les unes des autres.

Avantageusement, chaque cible comprend au moins deux types de marques de repérage, ces marques étant par exemple des billes ou des sphères réalisées en des matières ayant des capacités différentes de réflexion ou de diffusion de la lumière.

De façon générale, l'invention qui permet le repérage précis par triangulation d'un objet mobile dans une zone d'espace déterminée, est applicable aussi bien à la correction fine de la position et/ou de l'orientation d'un capteur ou d'un outil porté par un robot, qu'au recalage entre elles des informations fournies successivement par un capteur mobile porté par un robot.

L'invention sera mieux comprise et d'autres caractéristiques, détails et avantages de celle-ci apparaitront plus clairement à la lecture de la description qui suit, faite à titre d'exemple en référence aux dessins annexés dans lesquels :
la figure 1 est une vue schématique d'un dispositif selon l'invention;
la figure 2 est une vue en perspective illustrant le principe de l'invention;
la figure 3 est une vue schématique agrandie en perspective des moyens d'orientation d'une caméra vidéo utilisée dans le dispositif selon l'invention.

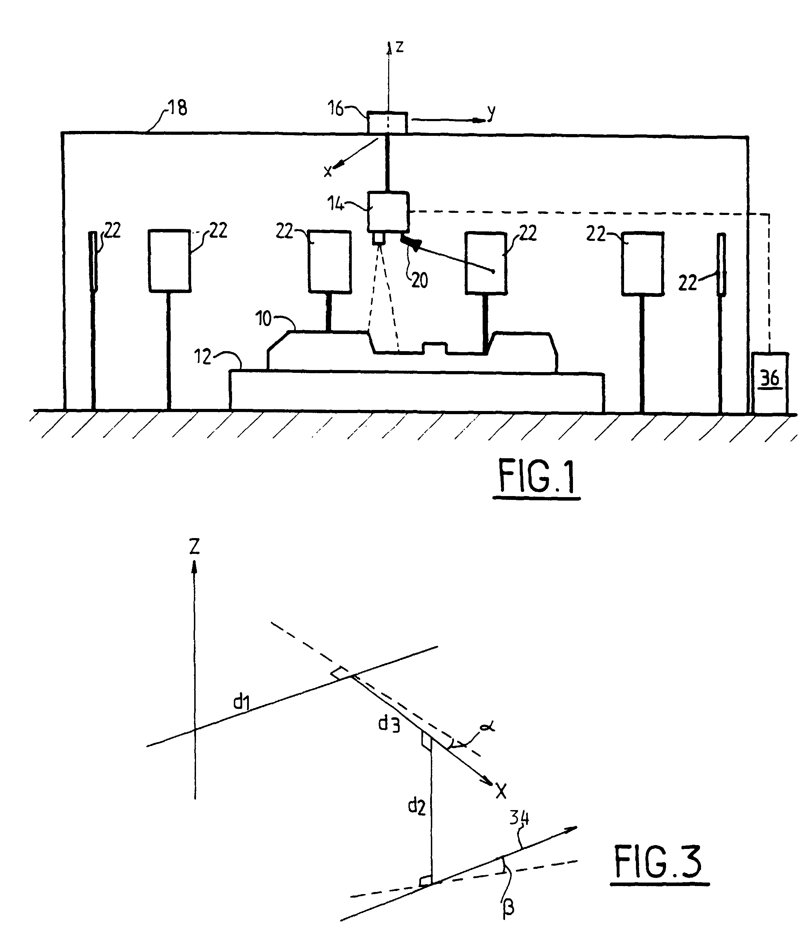

On se réfère d'abord à la figure 1, qui illustre une application particulière de l'invention, consistant à déterminer par voie optique sans contact la forme tridimensionnelle d'un objet 10 posé sur une surface de référence 12, le dispositif selon l'invention comprenant un capteur optique 14 qui est déplaçable au-dessus de l'objet 10 le long de trois axes orthogonaux x, y et z, en étant par exemple porté par un chariot 16 déplaçable sur un portique 18 et comprenant des moyens motorisés de déplacement du capteur 14 le long des axes x, y et z.

Les informations sur la surface de l'objet 10, qui sont fournies successivement dans le temps par le capteur 14, doivent être recalées ou positionnées les unes par rapport aux autres avec une grande précision, lorsqu'on veut disposer d'informations précises sur l'ensemble de la surface visible de l'objet 10. Ce recalage n'est possible qu'à condition de connaître avec précision la position et l'orientation du capteur 14 par rapport à un système fixe d'axes de référence.

Dans la technique antérieure, on utilise pour cela des théodolites disposés autour de la surface de référence 12 pour viser une marque de repérage formée sur le boîtier du capteur 14. Comme déjà indiqué, ces théodolites sont extrêmement coûteux et relativement peu commodes à utiliser.

L'invention permet d'obtenir un résultat semblable ou équivalent au moyen d'un détecteur photosensible tel qu'une caméra vidéo 20 qui est montée orientable autour d'au moins un axe sur le boîtier du capteur 14, et de cibles 22 qui sont disposées en des emplacements prédéterminés par rapport à la zone de déplacement du capteur 14, et qui sont par exemple réparties autour d'au moins une partie de la surface de référence 12.

En visant successivement trois cibles 22 au moyen de la caméra 20 et en déterminant à chaque fois le point d'intersection de l'axe optique de la caméra avec la cible 22 correspondante, on peut déterminer par triangulation la position et l'orientation du capteur tridimensionnel 14.

On arriverait au même résultat en remplaçant la caméra vidéo par un détecteur à quatre quadrants.

Dans tous les cas, il faut bien entendu que les emplacements et les orientations des cibles 22 soient connus avec une très grande précision.

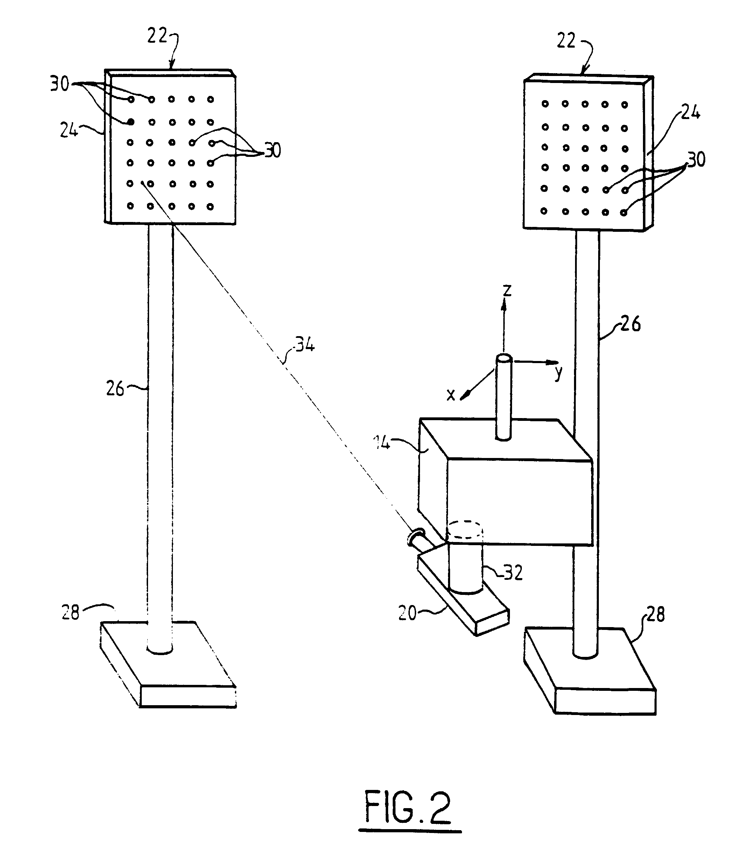

Comme représenté dans l'exemple de la figure 2, les cibles 22 peuvent être constituées par des panneaux plans 24, portés par des montants rigides 26 ancrés dans le sol au moyen de socles 28, divers moyens étant prévus pour empêcher ou limiter autant que possible les vibrations des montants 26 et des panneaux 24.

Chaque panneau 24 porte une série de marques de repérage constituées ici par des billes ou des sphères 30 disposées en rangées horizontales et en colonnes verticales sur une face du panneau 24 et séparées les unes des autres par des intervalles prédéterminés. De préférence, ces billes ou sphères 30 sont en une matière diffusante, telle qu'une céramique dépolie diffusant uniformément la lumière dans toutes les directions, de telle sorte que le centre de la tache lumineuse formée par l'image d'une bille sur le réseau de capteurs de la caméra 20 coincide avec le centre de la bille. On peut également prévoir que certaines billes ou sphères 30, par exemple celles placées aux quatre coins d'un panneau 24, seront réalisées en une matière différente, par exemple réfléchissante, pour pouvoir être identifiées à partir du flux lumineux qu'elles transmettent en direction de la caméra 20.

Des moyens d'éclairage des cibles 22 tels que des lampes à halogène peuvent être prévus de façon fixe sur le site mais sont de préférence montés sur le boîtier de la caméra 20 pour suivre les mouvements de celle-ci.

Il est également nécessaire de déterminer avec une grande précision la position et l'orientation de l'axe optique de la caméra 20 par rapport au boîtier du capteur 14. Pour cela, il est avantageux de monter la caméra 20 sur le boîtier du capteur 14 par l'intermédiaire d'un support motorisé 32 à rotation discrète ou pas à pas, permettant d'amener la caméra 20 dans des positions angulaires prédéterminées avec une précision élevée de répétabilité. De tels supports motorisés, par exemple du type à plateaux à encoches permettant l'orientation de la caméra 20 autour de deux axes perpendiculaires, sont disponibles dans le commerce (par exemple support à 2 axes commercialisé par la Société RENISHAW, à 720 positions indexables définies avec une précision de répétabilité de plus ou moins 5 µrad).

Dans la pratique et comme représenté schématiquement en figure 3, les deux axes de rotation, de la caméra 20 et son axe optique ne sont ni exactement perpendiculaires ni concourants.

En figure 3, les références Z et X désignent les deux axes de rotation de la caméra 20, la référence 34 désigne l'axe optique de la caméra, d1 est la distance entre les axes de rotation Z et X, d2 est la distance entre l'axe de rotation X et l'axe optique 34 de la caméra, d3 est la distance des intersections avec l'axe X des segments portant d1 et d2, a est le défaut d'orthogonalité de l'axe X et de l'axe Z, et β est le défaut d'orthogonalité de l'axe optique 34 et de l'axe X, les normales aux axes X et Z étant représentées en traits pointillés. La connaissance des valeurs de ces paramètres d1, d2, d3, α et β permet de corriger les mesures faites lors des visées des cibles 22 par la caméra 20.

Pour déterminer les valeurs de ces paramètres, on peut utiliser une cible du même type que les cibles 22 précitées, c'est-à-dire un panneau plan portant des rangées et des colonnes de billes constituant des marques de repérage, et on procède de la façon suivante :
le boîtier du capteur 14 étant dans une position et une orientation quelconques, on place ce panneau devant la caméra 20 et on vise avec celle-ci plusieurs zones de ce panneau à billes, en déterminant à chaque fois les coordonnées de l'intersection de l'axe optique de la caméra avec le panneau. On déplace ensuite le capteur 14 pour l'amener dans une nouvelle position, et on refait à nouveau plusieurs visées différentes de ce panneau avec la caméra 20 et ainsi de suite. En principe, il suffit de six visées différentes de ce panneau par la caméra 20 dans une même position du capteur 14 pour définir complètement la position et l'orientation du capteur 14, et les valeurs de d1, d2, d3, α et β. En effet, la position du boîtier du capteur 14 est définie par trois paramètres, son orientation est définie par trois autres paramètres et les paramètres liés à la structure du système d'articulation de la caméra 20 sont au nombre de cinq (ou éventuellement de six). Chaque visée avec la caméra 22 fournit deux valeurs de sorte que six visées pour une même position du capteur 14 suffisent à définir tous les paramètres recherchés. Pour augmenter la précision, on procède à un plus grand nombre de mesures, réalisées dans différentes positions du capteur.

Lorsque les valeurs des paramètres propres au support 32 de la caméra ont été définies avec précision, il est encore nécessaire de déterminer les positions relatives de l'axe optique 34 de la caméra 20 dans toutes les positions angulaires susceptibles d'être occupées par celle-ci. Cette calibration est effectuée à l'aide d'une machine à mesurer tridimensionnelle (par exemple "M.M.T.") qui permet de "palper" la position de la caméra dans toutes les orientations angulaires possibles. Cette mesure mécanique est réalisée par exemple en deux points sur la caméra pour définir un vecteur directeur avec une précision angulaire de ± 5 µrad.

On peut également définir de la même façon les positions des cibles. Par exemple, on place parmi les cibles le panneau plan portant des marques de repérage qui a été utilisé pour la détermination des paramètres propres au support articulé de la caméra, on amène le capteur 14 en face de ce panneau, on vise au moins trois zones différentes de ce panneau à l'aide de la caméra 20 en enregistrant les résultats, ce qui permet de définir la position et l'orientation relatives du capteur 14, on vise avec la caméra 20 autant de cibles 22 que possible, puis on déplace le capteur 14 et on recommence toutes les opérations précitées. Lorsque chaque cible 22 a été visée ainsi trois fois par la caméra 20, ses six coordonnées de position et d'orientation peuvent être définies complètement.

En variante, on peut également positionner le capteur 14 par rapport aux cibles 22, viser avec la caméra 20 autant de cibles que possible, déplacer le capteur 14 et recommencer à viser les cibles avec la caméra 20, et ainsi de suite, jusqu'à ce que l'on dispose d'au moins autant d'équations que d'inconnues. Dans cette variante, il n'est pas nécessaire d'utiliser le panneau plan de repérage, ce qui augmente la rapidité des opérations et facilite leur automatisation éventuelle.

La panneau portant les marques de repérage, utilisé pour la détermination des paramètres propres au support articulé de la caméra, peut également être utilisé pour l'étalonnage du capteur 14. Pour cela, ce panneau est placé sur la surface de référence 12, on amène le capteur 14 au-dessus de ce panneau, et on réalise avec ce capteur les mesures nécessaires à son étalonnage. Simultanément, on peut également viser le panneau à l'aide de la caméra vidéo 20, pour établir une relation biunivoque entre le système d'axes de référence lié au capteur 14 et le système d'axes de référence lié à la caméra 20.

Lorsque toutes ces opérations de calibration et d'étalonnage ont été réalisées, on peut poser sur la surface de référence 12 un objet quelconque 10 dont on veut déterminer la forme tridimensionnelle au moyen du capteur 14, et on déplace le capteur 14 pas à pas au-dessus de l'objet 10 pour l'acquisition des informations relatives à toute la surface de cet objet visible par le capteur 14. Dans chaque position de ce capteur, on utilise la caméra vidéo 20 pour viser au moins trois cibles 22 différentes, ce qui permet de déterminer la position et l'orientation du capteur 14 par triangulation.

Toutes les informations acquises par le capteur et par la caméra vidéo 20 sont transmises à un système de traitement de l'information désigné par la référence 36 en figure 1, que l'on peut utiliser également pour piloter les déplacements du capteur 14 au-dessus de l'objet 10.

La détermination de la position et de l'orientation du capteur 14 par triangulation se fait de la façon suivante :
chaque image d'une cible 22 vue par la caméra vidéo 20 est transmise sous forme numérique au système 36 de traitement de l'information, qui détermine avec précision le centre de cette image sur la cible 22 à partir des centres des images des billes 30. Ces centres sont eux-mêmes déterminés avec une précision meilleure que le pixel, par application du principe du barycentre. Une interpolation linéaire permet également d'obtenir une précision nettement meilleure que le pas entre pixels sur la position du centre de l'image. On obtient ainsi les coordonnées du point d'intersection de l'axe optique de la caméra 20 et de la cible 22. On connaît également la position angulaire de la caméra autour de chacun de ses axes de rotation. Les visées de trois cibles différentes 22 permettent donc de définir complètement les six coordonnées de position et d'orientation du capteur 14, en chaque position d'acquisition d'informations.

Pour fixer les idées, on indiquera à titre d'exemple que les cibles 22 placées à une distance d'un à trois mètres de la caméra 20 ont une surface de l'ordre de 200 cm² et portent environ une centaine de billes d'un diamètre de 3 mm espacées les unes des autres d'environ 10 mm. Dans ces conditions, avec une caméra vidéo 20 du type CCD comprenant 768 x 572 pixels, équipée d'un objectif à focale de 80 mm, on obtient des précisions de l'ordre de 40 µm et de 20 µrad respectivement sur les déterminations des coordonnées de position et d'orientation du capteur 14. Ces coordonnées peuvent être calculées en temps réel par le système 36 de traitement de l'information, la durée du calcul étant inférieure à une seconde lorsqu'on utilise un micro-ordinateur du type IBM-PC.

## Revendications

1. Procédé de repérage dans l'espace d'un objet mobile, tel par exemple qu'un capteur ou un outil porté par un robot, consistant à monter sur l'objet mobile (14) un détecteur photosensible tel par exemple qu'une caméra vidéo (20) et à viser au moyen du détecteur des cibles (22) disposées en des emplacements prédéterminés par rapport à la zone de déplacement de l'objet mobile (14), caractérisé en ce qu'il consiste également à monter le détecteur (20) orientable autour d'au moins un axe sur l'objet mobile (14), à viser les cibles (22) en faisant pivoter le détecteur autour dudit axe et sans déplacer l'objet mobile (14) pour obtenir des signaux de sortie du détecteur correspondant à des images des cibles visées, à déterminer à partir de ces signaux les positions de l'axe optique (34) du détecteur correspondant aux différentes cibles visées, et à en déduire par triangulation la position et l'orientation précises dudit objet mobile.

2. Procédé selon la revendication 1, caractérisé en ce qu'il consiste à déterminer avec précision les positions des points d'intersection de l'axe optique (34) du détecteur et des surfaces des cibles visées (22), à déterminer également les positions angulaires correspondantes du détecteur sur l'objet mobile (14), et à en déduire les positions correspondantes dans l'espace de l'axe optique du détecteur.

3. Procédé selon la revendication 1 ou 2, caractérisé en ce qu'il consiste à prendre en compte les paramètres propres aux moyens (32) d'orientation du détecteur (20) pour déterminer la position dans l'espace de son axe optique.

4. Procédé selon l'une des revendications précédentes, caractérisé en ce que, le détecteur (20) étant déplaçable en rotation pas à pas dans des positions angulaires définies avec une précision élevée de répétabilité, il comprend une opération préalable de calibration au cours de laquelle on détermine avec précision les positions relatives de l'axe optique (34) du détecteur pour toutes les positions angulaires possibles.

5. Procédé selon l'une des revendications précédentes, caractérisé en ce qu'il comprend une opération préalable de calibration au cours de laquelle on détermine avec précision les paramètres propres aux moyens (32) d'articulation du détecteur (20).

6. Procédé selon l'une des revendications précédentes, caractérisé en ce qu'il comprend une opération préalable de calibration au cours de laquelle on détermine avec précision les positions et orientations des cibles (22) en visant chacune d'elles au moins trois fois avec le détecteur (20) pour des positions différentes connues de l'objet mobile (14).

7. Dispositif de repérage dans l'espace d'un objet mobile tel par exemple qu'un capteur ou un outil porté par un robot, comprenant un détecteur photosensible tel qu'une caméra vidéo (20) par exemple, porté par l'objet mobile (14), des cibles (22) disposées en des emplacements prédéterminés par rapport à la zone de déplacement de l'objet mobile (14), et des moyens (36) de traitement de l'information, connectés au détecteur précité (20) pour recevoir des signaux correspondant auxdites cibles (22) visées par le détecteur, caractérisé en ce que le détecteur photosensible est monté orientable autour d'au moins un axe sur l'objet mobile (14) et en ce que le dispositif comprend également des moyens pour faire tourner le détecteur autour de cet axe en visant des cibles différentes (22) sans déplacer l'objet mobile (14), les moyens (36) de traitement de l'information recevant également des signaux correspondant aux orientations angulaires du détecteur autour de son axe correspondant aux cibles visées pour en déduire les positions de l'axe optique du détecteur correspondant aux cibles visées et pour déterminer par triangulation la position et l'orientation précises dudit objet mobile (14).

8. Dispositif selon la revendication 7, caractérisé en ce que le détecteur (20) est déplaçable en rotation autour de deux axes perpendiculaires.

9. Dispositif selon la revendication 7 ou 8, caractérisé en ce que le détecteur (20) est déplaçable en rotation pas à pas dans des positions angulaires prédéterminées autour de l'axe ou de chaque axe précité, ces positions angulaires étant définies avec une précision élevée de répétabilité.

10. Dispositif selon l'une des revendications 7 à 9, caractérisé en ce que les cibles (22) sont disposées en dehors de la zone de déplacement de l'objet mobile (14).

11. Dispositif selon l'une des revendications 7 à 10, caractérisé en ce que les cibles (22) comprennent des panneaux (24) portant des séries de marques de repérage (30) formées à des intervalles prédéterminées les unes des autres.

12. Dispositif selon la revendication 11, caractérisé en ce que chaque cible (22) comprend deux types de marques de repérage (30).

13. Dispositif selon la revendication 11 ou 12, caractérisé en ce que les marques de repérage sont des billes ou des sphères (30) réalisées en des matières ayant des capacités déterminées de réflexion ou de diffusion de la lumière.

14. Dispositif selon l'une des revendications 7 à 13, caractérisé en ce que les cibles (22) sont montées fixes sur des supports rigides (26, 28) comportant des moyens d'absorption des vibrations.

## Patentansprüche

1. Verfahren zur Ortsbestimmung eines beweglichen Objekts im Raum, wie z.B. eines Sensors bzw. Aufnehmers oder eines von einem Roboter getragenen Werkzeugs, darin bestehend, daß man auf dem beweglichen Objekt (14) einen lichtempfindlichen Detektor anbringt, wie z.B. eine Videokamera (20), und daß man mittels des Detektors Targets bzw. Zielscheiben (22) anvisiert, die an vorbestimmten Standorten mit Bezug auf die Zone der Verlagerung des beweglichen Objekts (14) angeordnet sind, dadurch **gekennzeichnet,** daß es außerdem darin besteht, den Detektor (20) um wenigstens eine ausricht- bzw. einstellbar Achse auf dem beweglichen Objekt (14) anzubringen, die Targets bzw. Zielscheiben anzuvisieren, indem man den Detektor sich um die genannte Achse und ohne das bewegliche Objekt (14) zu verlagern, verschwenken bzw. verdrehen läßt, um Ausgangssignale des Detektors zu erhalten, die Bildern der anvisierten Targets bzw. Zielscheiben entsprechen, daß man, ausgehend von diesen Signalen, die Positionen der optischen Achse (34) des Detektors bestimmt, welche unterschiedlichen anvisierten Targets bzw. Zielscheiben entsprechen, und daß man daraus durch Triangulation bzw. Dreiecknavigation die genaue Position und die genaue Ausrichtung des genannten beweglichen Objekts ableitet.

2. Verfahren gemäß Anspruch 1, dadurch **gekennzeichnet,** daß es darin besteht, mit Präzision die Positionen der Schnittpunkte der optischen Achse (34) des Detektors und der Oberflächen der anvisierten Targets bzw. Zielscheiben (22) zu bestimmen, sowie außerdem die entsprechenden Winkelpositionen des Detektors auf dem beweglichen Objekt (14) zu bestimmen, und daraus die entsprechenden Positionen der optischen Achse des Detektors im Raum abzuleiten.

3. Verfahren gemäß Anspruch 1 oder 2, dadurch **gekennzeichnet,** daß es darin besteht, die den Mitteln (32) für die Ausrichtung bzw. Einstellung des Detektors (20) eigenen Parameter in Rechnung zu stellen, um die Position seiner optischen Achse im Raum zu bestimmen.

4. Verfahren gemäß einem der vorhergehenden Ansprüche, dadurch **gekennzeichnet,** daß der Detektor (20) in schrittweiser Drehung in definierte Winkelpositionen mit einer erhöhten Präzision der Wiederholbarkeit verlagerbar ist, wobei es ein Vorverfahren der Kalibrierung umfaßt, in dessen Verlauf man mit Präzision die Relativpositionen der optischen Achse (34) des Detektors für alle die möglichen Winkelpositionen bestimmt.

5. Verfahren gemäß einem der vorhergehenden Ansprüche, dadurch **gekennzeichnet,** daß es ein Vorverfahren der Kalibrierung umfaßt, in dessen Verlauf man mit Präzision die den Mitteln (32) für die Verschwenkbarkeit des Detektors (20) eigenen Parameter bestimmt.

6. Verfahren gemäß einem der vorhergehenden Ansprüche, dadurch **gekennzeichnet,** daß es ein Vorverfahren der Kalibrierung umfaßt, in dessen Verlauf man mit Präzision die Positionen und Ausrichtungen bzw. Einstellungen der Targets bzw. Zielscheiben (22) bestimmt, indem man jedes bzw. jede derselben wenigstens dreimal mit dem Detektor (20) für unterschiedliche bekannte Positionen des beweglichen Objekts (14) anvisiert.

7. Einrichtung zur Ortsbestimmung eines beweglichen Objekts im Raum, wie z.B. eines Sensors bzw. Aufnehmers oder eines von einem Roboter getragenen Werkzeugs, umfassend einen lichtempfindlichen Detektor, wie z.B. eine Videokamera (20), der bzw. die von dem beweglichen Objekt (14) getragen ist, sowie Targets bzw. Zielscheiben (22), die an vorbestimmten Standorten mit Bezug auf die Zone der Verlagerung des beweglichen Objekts (14) angeordnet sind, und Mittel (36) für die Verarbeitung der Information, welche mit dem Detektor (20) zum Empfangen von Signalen, die den von dem Detektor anvisierten Targets bzw. Zielscheiben (22) entsprechen, verbunden sind, dadurch **gekennzeichnet,** daß der lichtempfindliche Detektor ausricht- bzw. einstellbar um wenigstens eine Achse auf dem beweglichen Objekt (14) angebracht ist, und daß die Einrichtung weiterhin Mittel zum Verschwenken bzw. Verdrehen des Detektors um diese Achse, indem man unterschiedliche Targets bzw. Zielscheiben (22) anvisiert, ohne das bewegliche Objekt (14) zu verlagern, umfaßt, wobei die Mittel (36) für die Verarbeitung der Information ferner Signale empfangen, die den Winkelausrichtungen bzw. -einstellungen des Detektors um seine Achse entsprechen, welche den anvisierten Targets bzw. Zielscheiben entsprenchen, um daraus die Positionen der optischen Achse des Detektors abzuleiten, die den anvisierten Targets bzw. Zielscheiben entsprechen, und um durch Triangulation bzw. Dreiecksnavigation die genaue Position und die genaue Ausrichtung des genannten beweglichen Objekts (14) zu bestimmen.

8. Einrichtung gemäß Anspruch 7, dadurch **gekennzeichnet,** daß der Detektor (20) in Drehung um zwei senkrechte Achsen verlagerbar ist.

9. Einrichtung gemäß Anspruch 7 oder 8, dadurch **gekennzeichnet ,** daß der Detektor (20) in Drehung schrittweise in vorbestimmte Winkelpositionen um die Achse oder jede vorgenannte Achse verlagerbar ist, wobei diese Winkelpositionen mit erhöhter Präzision der Wiederholbarkeit definiert sind.

10. Einrichtung gemäß einem der Ansprüche 7 bis 9, dadurch **gekennzeichnet,** daß die Targets bzw. Zielscheiben (22) außerhalb der Zone der Verlagerung des beweglichen Objekts (14) angeordnet sind.

11. Einrichtung gemäß einem der Ansprüche 7 bis 10, dadurch **gekennzeichnet,** daß die Targets bzw. Zielscheiben (22) Felder bzw. Platten (24) umfassen, welche eine Reihe von Peilungs- bzw. Ortungsmarkierungen (30) tragen, die in vorbestimmten Abständen voneinander ausgebildet sind.

12. Einrichtung gemäß Anspruch 11, dadurch **gekennzeichnet,** daß jedes Target bzw. jede Zielscheibe (22) zwei Arten von Ortungs- bzw. Peilungsmarkierungen (30) umfaßt bzw. enthält.

13. Einrichtung gemäß Anspruch 11 oder 12, dadurch **gekennzeichnet,** daß die Ortungs- bzw. Peilungsmarkierungen kleine Kugeln bzw. Bereiche bzw. Kreise bzw. Kugeln (30) sind, die aus Materialien hergestellt sind, welche vorbestimmte Fähigkeiten der Reflexion oder der Streuung des Lichts haben.

14. Einrichtung gemäß einem der Ansprüche 7 bis 13, dadurch **gekennzeichnet,** daß die Targets bzw. Zielscheiben (22) ortsfest auf starren bzw. steifen Trägern (26, 28) angebracht sind, welche Mittel für die Absorption von Vibrationen bzw. Schwingungen haben.

## Claims

1. A method of identifying the position in three dimensions of a movable object, e.g. such as a sensor or a tool carried by a robot, the method consisting in mounting a photosensitive detector, e.g. such as a video camera (20), on the movable object (14), and in using the detector to sight targets (22) disposed at predetermined locations relative to the displacement zone of the movable object (14), the method being characterized in that it also consists in mounting the detector (20) so as to be capable of being swivelled about at least one axis on the movable object, in sighting the targets (22) by pivoting the detector about said axis and without displacing the movable object (14) so as to obtain output signals from the detector that correspond to images of the sighted targets, in determining from said signals the positions of the optical axis (34) of the detector that correspond to the various sighted targets, and in deducing therefrom the accurate position and orientation of said movable object by triangulation.

2. A method according to claim 1, characterized in that it consists in accurately determining the positions of the points of intersection of the optical axis (34) of the detector and the surfaces of the sighted targets (22), in also determining the corresponding angular positions of the detector relative to the movable object (14), and in deducing therefrom the corresponding positions in three dimensions of the optical axis of the detector.

3. A method according to claim 1 or 2, characterized in that it consists in taking account of parameters specific to the means (32) for swivelling the detector (20) to determine the position in three dimensions of its optical axis.

4. A method according to any preceding claim, characterized in that for a detector (20) that is rotatable stepwise to occupy angular positions that are defined with a high degree of repeatability, the method includes a prior calibration operation during which the relative positions of the optical axis (34) of the detector are accurately determined for all possible angular positions.

5. A method according to any preceding claim, characterized in that it includes a prior calibration operation during which the parameters specific to the means (32) for swivelling the detector (20) are determined accurately.

6. A method according to any preceding claim, characterized in that it includes a prior calibration operation during which the positions and orientations of the targets (22) are accurately determined by sighting each of the targets at least three times with the detector (20) for different known positions of the movable object (14).

7. Apparatus for identifying the position in three dimensions of a movable object, e.g. such as a sensor or a tool carried by a robot, the apparatus comprising a photosensitive detector e.g. such as a video camera (20), carried by the movable object (14), targets (22) disposed in predetermined locations relative to the displacement zone of the movable object (14), and data processing means (36) connected to the above-specified detector (20) to receive signals corresponding to said targets (22) sighted by the detector, the apparatus being characterized in that the photosensitive detector is swivel-mounted so as to be capable of being swivelled about at least one axis on the movable object (14), and in that the apparatus also comprises means for turning the detector about said axis thereby sighting different targets (22) without displacing the movable object (14), the data processing means (36) also receive signals corresponding to the angular orientations of the detector about its axis corresponding to the sighted targets so as to deduce therefrom the positions of the optical axis of the detector corresponding to the sighted targets and to determine the accurate position and orientation of said movable object (14) by triangulation.

8. Apparatus according to claim 7, characterized in that the detector (20) is displaceable in rotation about two perpendicular axes.

9. Apparatus according to claim 7 or 8, characterized in that the detector (20) is displaceable in stepwise rotation to occupy predetermined angular positions about the, or each, above-mentioned axis, said angular positions being defined with a high degree of repeatability.

10. Apparatus according to any one of claims 7 to 9, characterized in that the targets (22) are located outside the displacement zone of the movable object (14).

11. Apparatus according to any one of claims 7 to 10, characterized in that the targets (22) comprise panels (24) carrying series of reference marks (30) formed at predetermined intervals relative to one another.

12. Apparatus according to claim 11, characterized in that each target (22) includes two types of reference mark (30).

13. Apparatus according to claim 11 or 12, characterized in that the reference marks are balls or spheres (30) made of materials having determined capacities for reflecting or diffusing light.

14. Apparatus according to any one of claims 7 to 13, characterized in that the targets (22) are mounted in fixed manner on rigid supports (26, 28) that include means for absorbing vibration.
